(19) Europäisches Patentamt
European Patent Office
Office européen des brevets

(11) **EP 1 960 739 B1**

(12) **EUROPÄISCHE PATENTSCHRIFT**

(45) Veröffentlichungstag und Bekanntmachung des Hinweises auf die Patenterteilung:
**10.03.2010 Patentblatt 2010/10**

(21) Anmeldenummer: **06807459.0**

(22) Anmeldetag: **23.10.2006**

(51) Int Cl.:
***G01C 21/00*** (2006.01)    ***G01C 21/32*** (2006.01)
***G06K 9/64*** (2006.01)

(86) Internationale Anmeldenummer:
**PCT/EP2006/067649**

(87) Internationale Veröffentlichungsnummer:
**WO 2007/065756 (14.06.2007 Gazette 2007/24)**

(54) **VERFAHREN UND SYSTEM ZUR LOKALISIERUNG EINES STRECKENABSCHNITTES IN EINER KARTE**

METHOD AND SYSTEM FOR LOCALIZING A PATH SECTION IN A MAP

PROCEDE ET SYSTEME DE LOCALISATION D'UN TRONÇON D'UNE PARTIE D'UN PARCOURS SUR UNE CARTE

(84) Benannte Vertragsstaaten:
**DE FR GB NL**

(30) Priorität: **06.12.2005 DE 102005058293**

(43) Veröffentlichungstag der Anmeldung:
**27.08.2008 Patentblatt 2008/35**

(73) Patentinhaber: **ROBERT BOSCH GMBH**
**70442 Stuttgart (DE)**

(72) Erfinder: **HESSLING, Matthias**
**31141 Hildesheim (DE)**

(56) Entgegenhaltungen:
**EP-A- 1 122 518     EP-A- 1 577 643**
**EP-A1- 1 225 552**

- **RELLIER G ET AL: "Local registration and deformation of a road cartographic database on a SPOT satellite image" PATTERN RECOGNITION, ELSEVIER, KIDLINGTON, GB, Bd. 35, Nr. 10, Oktober 2002 (2002-10), Seiten 2213-2221, XP004366779 ISSN: 0031-3203**

**Beschreibung**

Die vorliegende Erfindung betrifft ein Verfahren und ein System zur Lokalisierung eines bestimmten Streckenabschnittes aus einer ersten digitalisierten Karte eines Straßennetzes in einer zweiten digitalisierten Karte des Straßennetzes.

Die Verbesserung der Verkehrslage wird seit Jahren durch öffentliche Verkehrsbeeinflussungen in Form von Schilderbrücken und Wechselwegweisern angestrebt. Sie sind üblicherweise auf wenige Alternativrouten zu einer ebenfalls geringen Zahl von Zielen begrenzt. Neben dem individuellen Wunsch, schnellstmöglich an sein Ziel zu gelangen, ist es beispielsweise für die Kommunen von Interesse, Verkehrsströme so zu lenken, dass negative Auswirkungen so gering wie möglich bleiben. Hierbei ist der Wunsch nach einer individuell optimierten Route mit den Zielsetzungen einer kollektiven Verkehrslenkung zusammenzuführen.

Ein Teilaspekt der vorstehenden Problematik ist die Beschreibung des Ortes von Hinweisen und Störungen, der auch als Location bezeichnet wird. Im allgemeinen Sprachgebrauch wird mit einer Location, zu deutsch einer Örtlichkeit, ein Standort, also eine definierte Position in einem Straßennetz beschrieben. Location-based-services sind demnach Dienste, die den Standort des Benutzers mit einbeziehen. Dabei muss die Location nicht immer punktbasiert sein, wie der deutsche Begriff des Standortes impliziert. Eine Location kann somit auch im Netz ausgedehnt sein, beispielsweise ein bestimmter Straßenabschnitt.

Bei einer heutzutage üblichen dynamischen Navigation wird von einem Navigationssystem aufgrund empfangener Verkehrsdaten zu der aktuellen Verkehrslage die bereits berechnete Route überprüft und gegebenenfalls unter Berücksichtigung der veränderten Verkehrssituation erneut berechnet. Die Verkehrsdaten sind üblicherweise der Location bzw. einem bestimmten Streckenabschnitt des Straßennetzes zugeordnet, um eine Lokalisierung zu ermöglichen. Das Navigationssystem muss nun den bestimmten Streckenabschnitt in der ihm zur Verfügung stehenden Karte eindeutig lokalisieren, um die empfangene Verkehrsmeldung bei der Routenberechnung berücksichtigen zu können. Diese Lokalisierung wird auch mit Referenzierung bezeichnet.

Die Referenzierung einer Location soll nun genau diesen möglicherweise ausgedehnten Ort beschreiben, so dass er in einer fremden digitalisierten Karte eingepasst werden kann. Anders ausgedrückt handelt es sich dabei um ein Verfahren zur Beschreibung von Locations in einem Netz oder in Teilen eines Netzes mittels standardisierter Kodierungsvorschriften unabhängig von dessen speziellen Karteneigenschaften. Die Karte ist eine digitale Interpretation der Realität. Der Vorgang der Interpretation ist nicht standardisiert, wird jedoch in ähnlicher Vorgehensweise durchgeführt. Von verbleibenden Unterschieden sollte das Verfahren weitgehend unabhängig bleiben.

Hierbei ist die Referenzierung einer Location nicht unbedingt neu. Die postalische Adresse ist ein sehr altes Mittel der Referenzierung. Sie unterteilt sich in hoheitlich festgelegte Gebiete mit Nummern, bundesweit einheitlichen Ortsnamen und katasterlich festgelegte Straßennamen mit Hausnummern. Fehlt die Kenntnis über einen Eintrag, wenn beispielsweise eine Straße unbekannt ist, besteht nur eine sehr unzureichende Möglichkeit, die Referenz in der digitalisierten Karte wieder zu finden.

Bei der Georeferenzierung werden meist Koordinaten verwendet. Dabei werden Punkte zur Einpassung übereinander gelegt. Koordinaten und euklidische Abstände zeigen aber nicht die wirkliche Netzwerkentfernung zwischen verschiedenen Locations. So können geometrisch benachbarte Punkte durch natürliche Barrieren in dem Verkehrsnetz weit voneinander entfernt sein. Eine geringe Verschiebung der Koordinaten zwischen Sender und Empfänger kann also große Fehler bei der Interpretation verursachen.

Als Grundlage für die Fahrzeugnavigation greifen die Navigationssysteme auf digitalisierte Karten des Straßennetzes zu. Diese Karten sind allerdings nicht standardisiert, so dass es bei Karten von unterschiedlichen Herstellern zu Abweichungen in der digitalisierten Karteninformation und zu Verschiebungen der Koordinaten kommen kann. Diese Unterschiede entstehen beispielsweise durch verschiedene Interpretationen der Realität, beispielsweise standardisierte Kurvenradien und Kreuzungsdarstellungen, sondern auch durch einen kontinuierlichen Entwicklungsprozess des Netzwerks über die Zeit.

Aus dem Dokument RELLIER G ET AL: "Local registration and deformation of a road cartograhic database on a SPOT satellite image", PATTERN RECOGNITION, ELSEVIER, KIDLINGTON, GB, Bd. 35, Nr. 10, Oktober 2002, Seiten 2213-2221, XP004366779 ISSN: 0031-3203 geht eine Methode hervor, aus Satellitenbildern kartografische Informationen von Straßennetzen zu gewinnen. Hierbei werden mathematische Methoden wie Markoffsche Zufallsfelder (MRF) verwendet. Das dortige Verfahren ermöglicht eine verbesserte Umsetzung von Bildinformationen in digital verarbeitbare geografische Informationen, z. B. in Form von digitalisierten Karten eines Straßennetzes.

In verschiedenen Gemeinschaftsprojekten wurden europaweit Vorschläge zur Thematik der Referenzierung einer Location gemacht, die hier als Grundlage dienen sollen. Das Projekt AGORA hat beispielsweise eine Methode zur Encodierung von Referenzen einer Location und spezifizierter Regeln aufgezeigt, die zu der gewünschten Unabhängigkeit der Referenzen der Location von der Karte führen sollen.

In der EP 1 122 518 A1 wird ein Verfahren zur Decodierung von linienförmigen geografischen Objekten mit Hilfe einer Datenbank offenbart, die ein Verkehrswegenetz mit linienförmigen Objekten enthält. Es ist vorgesehen, dass jeweils eine Menge von Punkten eines zu decodierenden Objekts und der Objekte des Verkehrswegenetzes gebildet wird, dass für mehrere relative Lagen der Punktmengen zueinander für eine der Punktmengen die Zahl von Punkten ermittelt wird, welche innerhalb eines vorgegebenen Abstandes mindestens eines der Punkte liegen, und dass das zu decodierende Objekt in derjenigen relativen Lage, in der die Zahl am größten ist, durch Ausgabe des dann mit dem Objekt korrelierten Teils des Verkehrswegenetzes decodiert wird.

Ferner wird in der EP 1225 552 B1 ein Verfahren zur Referenzierung einer Location in einem insgesamt geografischen Kontext offenbart, bei dem bezüglich eines von einem Service-Provider bereitgestellten ersten Straßensegments zwischen zwei aufeinanderfolgenden Drehpunkten, die dazwischen eine kleinste gewichtete Entfernung bereitstellen, jedem zweiten Straßensegment, das eine disjunkte Alternative zu dem ganzen ersten Straßensegment oder einem Teil davon ist, eine gewichtete Entfernung zugeordnet wird, die wesentlich größer ist als die gewichtete Entfernung des ganzen bzw. des Teils.

Diese bisher bekannten Verfahren wenden vorhandene Informationen in mehr oder weniger direkter Form an und sind daher besonders bei fehlender Information, beispielsweise ein fehlender Straßenabschnitt, fehleranfällig.

Vor diesem Hintergrund ist es die Aufgabe der vorliegenden Erfindung, eine Lokalisierung eines Streckenabschnittes in einer Karte zu verbessern und die Robustheit gegenüber Ungenauigkeiten im zu Grunde liegenden Kartenmaterial zu erhöhen. Hierbei soll die Effizienz in der Ausführung und bei dem Speicherverbrauch bereitgestellt werden.

Diese Aufgabe wird durch ein Verfahren mit den Merkmalen gemäß Anspruch 1 sowie durch ein System mit den Merkmalen des Anspruchs 13 gelöst.

Erfindungsgemäß ist bei einem Verfahren und einem System der eingangs beschriebenen Art vorgesehen, dass der Streckenabschnitt als schwarz/weißes oder farbiges Straßenausschnittsbild aufgefasst wird, worin die Straßen durch unterscheidbare Grau- oder Farbwerte erkennbar sind. In dem Straßenausschnittsbild werden stufige, harte Grau- oder Farbübergänge in weiche Grau- oder Farbverläufe überführt und das weichgezeichnete Straßenausschnittsbild wird mit einer bestimmten Transformation transformiert. Ein zweites Straßenausschnittsbild wird in der zweiten Karte in einer angenommenen Nähe des bestimmten Streckenabschnittes festgelegt. Stufige, harte Grau- oder Farbübergänge in dem zweiten Straßenausschnittsbild werden in weiche Grau- oder Farbverläufe überführt und das weichgezeichnete Straßenausschnittsbild wird mit der bestimmten Transformation transformiert. Abschließend werden die Transformations-Koeffizienten miteinander verglichen, um aus einer Bewertung der Transformations-Koeffizienten die örtliche Lage des bestimmten Streckenabschnittes in der zweiten Karte zu ermitteln.

Hierbei ist bei zwei miteinander kommunizierenden Systemen, die auf jeweils eine digitalisierte Karte zugreifen, nicht festgelegt, ob stets beide Systeme die Transformation für den Straßenausschnitt ihrer Karte durchführen oder ob eines der beiden Systeme für beide Kartenausschnitte die Transformation durchführt, um anschließend die Transformations-Koeffizienten bewertend zu vergleichen.

Das Straßennetz besteht aus im Wesentlichen linienförmigen Objekten, die in der digitalisierten Karte üblicherweise als Polygonzüge abgespeichert sind. Erfindungsgemäß wird diese linienartige Darstellung als punktweise aufgebautes Bild aufgefasst. In diesem Straßenausschnittsbild sind die Straßen von den dazwischen liegenden Freiflächen durch unterschiedliche Färbungen unterscheidbar, beispielsweise können die Straßen schwarz und die Freiflächen weiß dargestellt sein.

Diese bildliche Darstellung ist nun in einfacher Weise in eine Beschreibung mittels einer Matrix übertragbar, bei der die Zahlenwerte der einzelnen Matrixelemente einer bestimmten Farbe bzw. einem bestimmten Grau- oder Farbwert entsprechen. Somit steht eine Darstellung der Karteninformation zur Verfügung, die mittels geeigneter Algorithmen modifizierbar und interpretierbar ist.

Durch das erfindungsgemäß vorgenommene Weichzeichnen wird die anschließend durchgeführte bestimmte Transformation gegenüber einer geringen, beispielsweise punktweisen Verschiebung des Straßenausschnittsbildes stabilisiert. Zusätzlich wird die Auswirkung geringer Abweichungen in den beiden digitalisierten Karten des Straßennetzes reduziert.

In vorteilhafter Weise werden bei dem Weichzeichnen ausgehend von den Straßen die Grau- oder Farbwerte von Bildpunkten der Straßenumgebung punktweise dem Grau- oder Farbwert der Straße angepasst. Alternativ werden bei dem Weichzeichnen ausgehend von den Freiflächen die Grau- oder Farbwerte der Bildpunkte der Straßenumgebung punktweise dem Grau- oder Farbwert der Freiflächen angepasst. Bei einer Farbauswahl mit schwarzen Straßen und ursprünglich weißen Freiflächen, wird die Straßenumgebung in eine Graustufen-Abbildung umgewandelt.

Bevorzugt ist vorgesehen, dass bei dem Anpassen der Einfluss der Grau- oder Farbwerte mit einer definierten Abklingfunktion monoton abnimmt. Diese Abklingfunktion kann durch eine lineare, hyperbolische, exponentielle, polynomiale oder logarithmische Funktion oder eine Funktion als beliebige Kombination der vorstehend aufgezählten Funktionen sein.

Vorteilhaft ist vorgesehen, dass bei dem erfindungsgemäßen Verfahren Koeffizienten einer ortstreuen Transformation berechnet werden. Dadurch bleibt auch in dem transformierten Bild bzw. in den transformierten Daten die Ortsinformation erhalten. Befindet sich ein Streckenabschnitt in dem betrachteten Kartenausschnitt in einem oberen linken Bereich, so wird auch das transformierte Bild in dem oberen linken Bereich die diesen Streckenabschnitt betreffende Information enthalten.

Bevorzugt werden in einer erfindungsgemäßen Ausgestaltung des Verfahrens Wavelet-Koeffizienten einer Wavelet-Transformation berechnet. Besonders bevorzugt ist die Verwendung des Haar-Wavelets, das wie folgt definiert ist:

$$\Psi_{Haar}(x) = \begin{cases} -1, \text{ für } x \in \left[0, \frac{1}{2}\right] \\ +1, \text{ für } x \in \left[\frac{1}{2}, 1\right] \\ 0, \text{ sonst} \end{cases}.$$

In vorteilhafter Weise werden bei dem Vergleichen der Transformations-Koeffizienten mehrere Matrizenvergleiche durchgeführt, bei denen jeweils eine Differenzmatrix berechnet wird und anschließend Matrixelemente gezählt werden, die betragsmäßig einen vorbestimmten Grenzwert unterschreiten. Die Anzahl ist dann das Maß der Güte für die Bewertung und die Minima in der Differenzmatrix dienen zur Lokalisierung des Streckenabschnitts.

Alternativ werden bei dem Vergleichen der Transformations-Koeffizienten mehrere Matrizenvergleiche durchgeführt, bei denen eine Differenzmatrix berechnet und anschließend die Norm der Differenzmatrix gebildet wird, welche zur Bewertung der Güte verwendet wird. Die Lokalisierung erfolgt wiederum anhand der Minima in der Differenzmatrix. Die Norm ist hier als eine Längenfunktion der Matrizen zu verstehen. Dabei sind mögliche. Ausprägungen die Spektralnorm, die Unendlichnorm oder die Einsnorm.

Bevorzugt werden die Transformations-Koeffizienten über mehrere Dekompositionsstufen berechnet und insbesondere bevorzugt wird die Lokalisierung mit einer höheren Dekompositionsstufe begonnen, wodurch eine Verkleinerung des Suchradius auf niedrigeren Dekompositionsstufen möglich wird. Höhere Dekompositionsstufen zeichnen sich durch eine Reduktion der Datenmenge der Bildpunkte aus und bleiben beispielsweise durch die Ortstreue der verwendeten Wavelet-Funktion lokalisierbar trotz einer zunehmenden Unschärfe des Ortes. Dies kann schneller zu Ergebnissen aufgrund einer geringeren Anzahl an Berechnungsschritten führen.

In vorteilhafter Weise kann aus der Bewertung der Transformations-Koeffizienten zusätzlich ein Versatz, eine Verdrehung und/oder eine Verzerrung des bestimmten Streckenabschnittes in der zweiten Karte ermittelt werden kann. Dies führt zu einer größeren Robustheit gegenüber Abweichungen in den zur Verfügung stehenden digitalisierten Karten.

Nachfolgend wird das erfindungsgemäße Verfahren unter Bezug auf die beigefügten Zeichnungen beispielhaft näher erläutert, in denen:

| Figur 1 - | eine schematische Skizze zweier Systeme mit digitalisierten Karten zeigt, die miteinander zu vergleichen sind, |
| Figur 2 - | einen Ausschnitt eines Straßennetzes zeigt, |
| Figur 3 - | einen Ausschnitt eines Straßennetzes auf der Encoderseite zeigt, und |
| Figuren 4a-d - | jeweils einen Ausschnitt eines Straßennetzes auf der Decoderseite zeigen. |

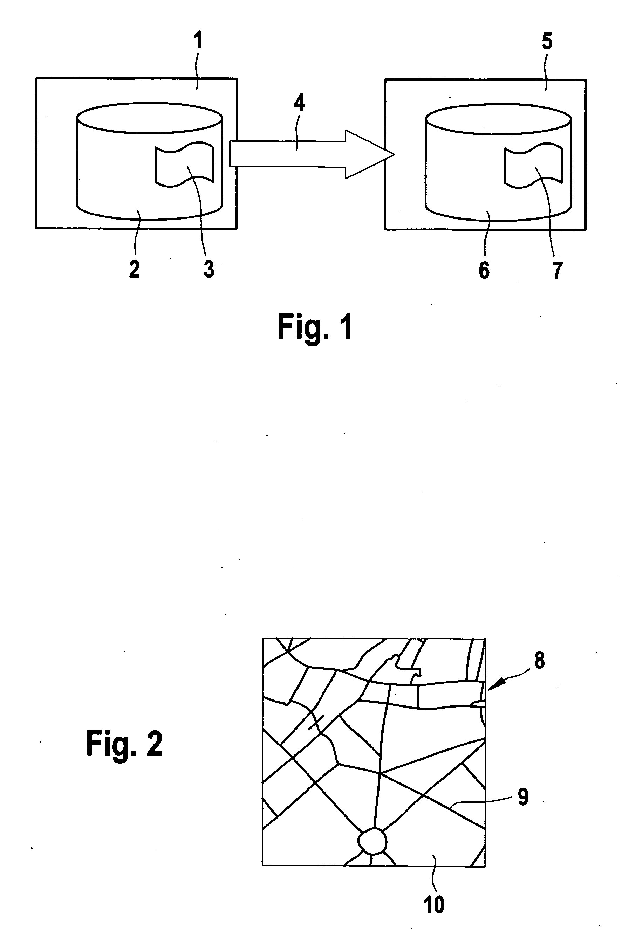

Figur 1 zeigt schematisch skizziert ein Sendersystem 1 mit einer in einem Datenspeicher 2 abgespeicherten digitalisierten Karte eines Straßennetzes. Ein bestimmter Streckenabschnitt bzw. Straßenausschnitt, gekennzeichnet durch das Bezugszeichen 3, wird in dem Sendersystem 1 mit einem geeigneten Verfahren für eine Datenübertragung kodiert. Die kodierte Karteninformation wird anschließend über eine Übertragungsstrecke 4 an ein Empfängersystem 5 übertragen.

In einer zweiten digitalisierten Karte, die in einem Datenspeicher 6 des Empfängersystems 5 abgespeichert ist, soll ein dem Streckenabschnitt 3 entsprechende Streckenabschnitt 7 lokalisiert werden. Für den Vorgang der Kodierung und Dekodierung werden nur Geometriedaten der Straßen in den Straßenausschnitten 3 und 7 zur Verfügung gestellt.

Der in der Figur 1 gezeigte. Aufbau lässt prinzipiell zwei alternative Möglichkeiten für die Durchführung des erfindungsgemäßen Verfahrens zu. In einer der beiden Variationen wird auf der Encoderseite, also durch das Sendersystem 1, das dem Streckenabschnitt 3 entsprechende Straßenausschnittsbild weichgezeichnet und in eine Matrixform übertragen. Anschließend wird auf die Matrix die Wavelet-Transformation durchgeführt.

Die bei der Transformation entstehenden, mehreren Koeffizientenmatrizen werden über die Übertragungsstrecke 4 auf die Decoderseite bzw. an das Empfängersystem 5 übertragen. Decoderseitig wird ebenfalls ein dem gesuchten Streckenabschnitt 7 möglicherweise entsprechendes Straßenausschnittsbild in gleicher Weise verarbeitet.

Bei der zweiten Variation führt die Encoderseite keine Transformation durch, sondern überträgt die geometrische Information des Streckenabschnittes. In diesem Fall wird auf der Decoderseite für beide Kartendarstellungen die Wavelet-Transformation durchgeführt. Bei der zweiten Variation kann die zu übertragende Datenmenge deutlich geringer ausfallen, als bei der ersten Variation mit der Übertragung von mehreren Koeffizientenmatrizen. Nachteilig ist allerdings, dass der gesamte Berechnungsaufwand decoderseitig anfällt.

Anschließend werden in beiden Variationen die jeweiligen Koeffizientenmatrizen miteinander verglichen. Für mehrere mögliche Lagen des gesuchten Objektes zu dem Referenzobjekt wird eine Zahl ermittelt, die eine Ähnlichkeit der Wavelet-transformierten Werte des Objektes zu denen des Referenzobjektes ermittelt. Das zu dekodierende Objekt wird in derjenigen Lage, in der die so ermittelte Ähnlichkeit eine genügend große, definierte Güte erreicht hat, als wieder gefunden angesehen.

In der Figur 2 ist ein Ausschnitt 8 eines Straßennetzes 9 gezeigt. Die einzelnen Straßen 9 sind durch schwarze Linien dargestellt. Die Zwischenräume bzw. Freiflächen 10 zwischen den schwarz dargestellten Straßen 9 sind weiße Flächen. Aus der Figur 2 ersichtlich ist jeweils ein abrupter Übergang von einer Freifläche 10 zu einer Straße 9 durch den Farbwechsel von Weiß auf Schwarz zu erkennen.

Erfindungsgemäß wird in einem ersten Schritt dieser Übergang verschmiert bzw. der Straßenverlauf weichgezeichnet. Dies führt dazu, dass die Straßen 9 weiterhin schwarz bleiben während die Freiflächen 10 von den Straßen 9 ausgehend eine Farbgebung erhalten, die immer heller wird je weiter die nächste Straße 9 entfernt ist. Jedem Bildpunkt wird somit eine Farbe oder Graustufe zugeordnet. Der Kartenausschnitt 8 kann dabei als n x m-Matrix aufgefasst werden, bei der die jeweiligen Matrizenelemente einem Bildpunkt zugeordnet sind und der Zahlenwert dem Grau- oder Farbwert entspricht.

Auf die Matrix wird die Wavelet-Transformation mit der Haar-Funktion angewendet. Dadurch werden die entsprechenden Koeffizientenmatrizen der horizontalen, vertikalen und diagonalen Wavelet-Koeffizienten erhalten. Die Zahlenwerte dieser Koeffizientematrizen ergeben bei einer erneuten Darstellung mit Hilfe der den Zahlenwerten entsprechenden Grau- oder Farbwerte eine Darstellung des Straßenausschnitts 8 jeweils als eine Gebirgslandschaft, bei der die Straßen den Bergkämmen entsprechen.

Die Wavelet-Transformation ergibt horizontale Wavelet-Koeffizienten, vertikale Wavelet-Koeffizienten und diagonale Wavelet-Koeffizienten. Die Gebirgslandschaft bzw. das Höhenprofil der horizontalen Wavelet-Koeffizienten betonen den Anteil der horizontal verlaufenden Straßen, während die Information der vertikal verlaufenden Straßen nahezu verschwindet. Entsprechend andere Höhenprofile mit anderen Betonungen ergeben somit die Darstellungen der vertikalen bzw. der diagonalen Wavelet-Koeffizienten.

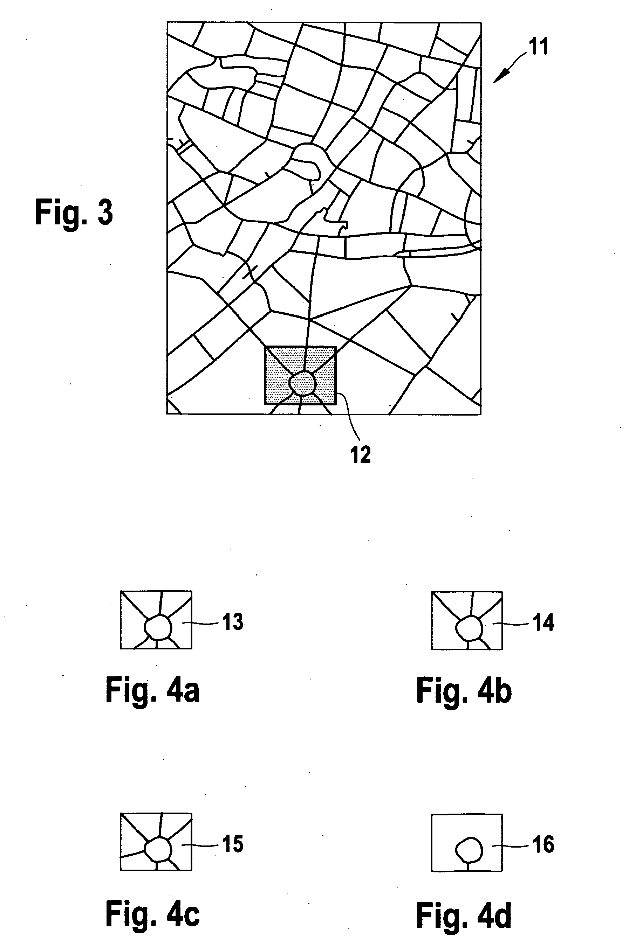

In Figur 3 ist ein Kartenausschnitt 11 der Encoderseite dargestellt, der zum Teil dem Kartenausschnitt 8 aus Figur 2 entspricht. In der Figur 3 ist ein Bereich um einen Kreisverkehr 12 invertiert dargestellt, der als Location auf der Decoderseite wieder gefunden werden soll.

In den Figuren 4a bis d ist jeweils der wieder zu findende Kreisverkehr 12 der Figur 3 in vier unterschiedlichen Kartendarstellungen der Decoderseite gezeigt. In der Darstellung der Figur 4a stimmt der Kreisverkehr 13 vollständig mit dem invertierten Ausschnitt der Figur 3 überein. Der Kartenausschnitt der Figur 4b lässt lediglich eine Zufahrtsstraße bei dem Kreisverkehr 14 vermissen. In der Darstellung der Figur 4c ist eine der Zufahrtsstraßen des Kreisverkehrs 15 abweichend von dem Kreisverkehr 12 der Figur 3 dargestellt, während die Darstellung der Figur 4d bei dem Kreisverkehr 16 lediglich eine der Zufahrtsstraßen vorhanden ist und die übrigen fünf Zufahrtsstraßen vollständig fehlen.

Die Anwendung des erfindungsgemäßen Verfahrens führt dazu, dass selbstverständlich der Kartenausschnitt 4a als gesuchte Location erkannt wird. Aber auch die abweichenden Darstellungen der Figuren 4b und 4c werden ohne größere Schwierigkeiten als die gesuchte Location identifiziert.

Die Wahrscheinlichkeit die Location der Figur 3 als Bestandteil der Figur 4d wieder zu finden, hängt unter anderem davon ab, ob in der näheren Umgebung eine ähnliche Straßenform, beispielsweise ein weiterer Kreisverkehr, existiert. Die fehlende Aussagekraft lässt sich an der Tatsache erkennen, dass das Maximum sich weniger steil von den umliegenden Gebieten, aber auch in der Höhe in Bezug auf beliebige andere untersuchte Orte weniger markant abhebt. Es bleibt aber festzustellen, dass das erfindungsgemäße Verfahren ausreichend robust genug gegenüber Abweichungen der Kartendarstellungen ist, so dass die Straßenverläufe oder Kreisverkehre 14 bzw. 15 der Figuren 4b bzw. 4c ohne Probleme als der gesuchten Streckenabschnitt oder Kreisverkehr 13 aus der Figur 3 lokalisiert werden und bei fehlender Aussagesicherheit die ungenauere Aussage ebenfalls erkannt werden kann.

**Patentansprüche**

1. Verfahren zur Lokalisierung eines bestimmten Streckenabschnittes (3) aus einer ersten digitalisierten Karte eines Straßennetzes (9) in einer zweiten digitalisierten Karte des Straßennetzes, **dadurch gekennzeichnet, dass** der Streckenabschnitt (3) als schwarz/weißes oder farbiges Straßenabschnittsbild aufgefasst wird, worin die Straßen durch unterscheidbare Grau- oder Farbübergänge erkennbar sind; in dem Straßenausschnittsbild stufige, harte Grau- oder Farbübergänge in weiche Grau- oder Farbverläufe überführt werden und das weichgezeichnete Straßenausschnittsbild mit einer bestimmten Transformation transformiert wird, ein zweites Straßenausschnittsbild in der zweiten Karte in einer angenommenen Nähe des bestimmten Streckenabschnitts (7) festgelegt wird, stufige, harte Grau- oder Farbübergänge in dem zweiten Straßenausschnittsbild in weiche Grau- oder Farbverläufe überführt werden und das weichgezeichnete Straßenausschnittsbild mit der bestimmten Transformation transformiert wird; und anschließend Transformations-Koeffizienten miteinander verglichen werden, um aus einer Bewertung der Transformations-Koeffizienten die örtliche Lage des bestimmten Streckenabschnittes (7) in der zweiten Karte zu ermitteln.

2. Verfahren nach Anspruch 1, **dadurch gekennzeichnet, dass** bei dem Weichzeichnen ausgehend von den Straßen die Grau- oder Farbwerte von Bildpunkten der Straßenumgebung punktweise dem Grau- oder Farbwert der Straße angepasst werden.

3. Verfahren nach Anspruch 1, **dadurch gekennzeichnet, dass** bei dem Weichzeichnen ausgehend von zwischen den Straßen liegende Freiflächen (10) die Grau- oder Farbwerte von Bildpunkten der Straßenumgebung punktweise dem Grau- oder Farbwert der Freifläche angepasst werden.

4. Verfahren nach Anspruch 2 oder 3, **dadurch gekennzeichnet, dass** bei dem Anpassen der Einfluss der Grau- oder Farbwerte mit einer definierten Abklingfunktion abnimmt.

5. Verfahren nach einem der vorstehenden Ansprüche, **dadurch gekennzeichnet, dass** Koeffizienten einer ortstreuen Transformation berechnet werden.

6. Verfahren nach Anspruch 5, **dadurch gekennzeichnet, dass** Wavelet-Koeffizienten einer Wavelet-Transformation berechnet werden.

7. Verfahren nach Anspruch 6, **dadurch gekennzeichnet, dass** das Haar-Wavelet verwendet wird.

8. Verfahren nach einem der vorstehenden Ansprüche, **dadurch gekennzeichnet, dass** bei dem Vergleichen der Transformations-Koeffizienten mehrere Matrizenvergleiche durchgeführt werden, bei denen jeweils eine Differenzmatrix berechnet wird und anschließend Matrixelemente gezählt werden, die betragsmäßig einen vorbestimmten Grenzwert unterschreiten.

9. Verfahren nach einem der Ansprüche 1 bis 7, **dadurch gekennzeichnet, dass** bei dem Vergleichen der Transformations-Koeffizienten mehrere Matrizenvergleiche durchgeführt werden, bei denn jeweils eine Differenzmatrix berechnet und anschließend die Norm der Differenzmatrix gebildet wird.

10. Verfahren nach einem der vorstehenden Ansprüche, **dadurch gekennzeichnet, dass** die Transformations-Koeffizienten über mehrere Dekompositionsstufen berechnet werden.

11. Verfahren nach Anspruch 10, **dadurch gekenn-**

**zeichnet, dass** die Lokalisierung mit einer höheren Dekompositionsstufe begonnen wird.

12. Verfahren nach einem der vorstehenden Ansprüche, **dadurch gekennzeichnet, dass** aus der Bewertung der Transformations-Koeffizienten zusätzlich ein Versatz, eine Verdrehung und/oder eine Verzerrung des bestimmten Streckenabschnittes in der zweiten Karte ermittelt werden kann.

13. System (1, 5) mit einem Datenspeicher (2) für eine erste digitalisierte Karte eines Straßennetzes (9) und einem Datenspeicher (6) für eine zweite digitalisierte Karte des Straßennetzes zur Durchführung des Verfahrens zu Lokalisierung eines bestimmten Streckenabschnittes (3) aus der ersten digitalisierten Karte des Straßennetzes in der zweiten digitalisierten Karte des Straßennetzes nach einem der Ansprüche 1 bis 12, und das System (1, 5) ausgebildet ist, einen Streckenabschnitt (3) der Karte als schwarz/weißes oder farbiges Straßenausschnittsbild aufzufassen, worin die Straßen durch unterscheidbare Grau- oder Farbwerte erkennbar sind; in dem Straßenausschnittsbild stufige, harte Grau- oder Farbübergänge in weiche Grau- oder Farbverläufe zu überführen und das weichgezeichnete Straßenausschnittsbild mit einer bestimmten Transformation zu transformieren, ein zweites Straßenausschnittsbild in der zweiten Karte in einer angenommenen Nähe des bestimmten Streckenabschnittes (7) festzulegen, stufige, harte Grau- oder Farbübergänge in dem zweiten Streckenausschnittsbild in weiche Grau- oder Farbverläufe zu überführen und das weichgezeichnete Straßenausschnittsbild mit der bestimmten Transformation zu transformieren, und anschließend Transformations-Koeffizienten miteinander zu vergleichen, um aus einer Bewertung der Transformations-Koeffizienten die örtliche Lage des bestimmten Streckenabschnittes in der zweiten Karte zu ermitteln.

**Claims**

1. Method for locating a particular route section (3) from a first digitized map of a road network (9) in a second digitized map of the road network, **characterized in that** the route section (3) is considered as a black and white or colour road section image in which the roads are recognizable by distinguishable grey or colour transitions; stepped, hard grey or colour transitions in the road detail image are converted into soft grey or colour progressions, and the softly depicted road detail image is transformed using a particular transformation, a second road detail image is stipulated in the second map in assumed proximity to the particular route section (7), stepped, hard grey or colour transitions in the second road detail image are converted into soft grey or colour progressions, and the softly depicted road detail image is transformed using the particular transformation; and subsequently transformation coefficients are compared with one another in order to ascertain from an assessment of the transformation coefficients the local position of the particular route section (7) in the second map.

2. Method according to Claim 1, **characterized in that** the soft depiction involves the roads being taken as a starting point for matching the grey or colour values of pixels of the road surroundings dot by dot to the grey or colour value of the road.

3. Method according to Claim 1, **characterized in that** the soft depiction involves open spaces (10) situated between the roads being taken as a starting point for matching the grey or colour values of pixels of the road surroundings dot by dot to the grey or colour value of the open space.

4. Method according to Claim 2 or 3, **characterized in that** during the matching the influence of the grey or colour values diminishes with a defined decay function.

5. Method according to one of the preceding claims, **characterized in that** coefficients of a true-to-location transformation are calculated.

6. Method according to Claim 5, **characterized in that** wavelet coefficients of a wavelet transformation are calculated.

7. Method according to Claim 6, **characterized in that** the Haar wavelet is used.

8. Method according to one of the preceding claims, **characterized in that** the comparison of the transformation coefficients involves the performance of a plurality of matrix comparisons, in which a respective differential matrix is calculated and then matrix elements which have an absolute value below a predetermined limit value are counted.

9. Method according to one of Claims 1 to 7, **characterized in that** the comparison of the transformation coefficients involves the performance of a plurality of matrix comparisons in which a respective differential matrix is calculated and then the standard for the differential matrix is formed.

10. Method according to one of the preceding claims, **characterized in that** the transformation coefficients are calculated over a plurality of decomposition levels.

11. Method according to Claim 10, **characterized in that** the locating is started at a relatively high decomposition level.

12. Method according to one of the preceding claims, **characterized in that** from the assessment of the transformation coefficients it is additionally possible to ascertain an offset, a twist and/or a distortion in the particular route section in the second map.

13. System (1, 5) having a data memory (2) for a first digitized map of a road network (9) and a data memory (6) for a second digitized map of the road network for performing the method for locating a particular route section (3) from the first digitized map of the road network in the second digitized map of the road network according to one of Claims 1 to 12, and the system (1, 5) is designed to consider a route section (3) of the map as a black and white or colour road detail image in which the roads are recognizable by distinguishable grey or colour values; to convert stepped, hard grey or colour transitions in the road detail image into soft grey or colour progressions and to transform the softly depicted road detail image using a particular transformation, to stipulate a second road detail image in the second map in an assumed proximity to the particular route section (7), to convert stepped, hard grey or colour transitions in the second route detail image into soft grey or colour progressions and to transform the softly depicted road detail image using the particular transformation, and subsequently to compare transformation coefficients with one another in order to ascertain from an assessment of the transformation coefficients the local position of the particular route section in the second map.

## Revendications

1. Procédé de localisation d'une portion de trajet (3) donnée d'une carte numérisée d'un réseau routier (9) dans une deuxième carte numérisée du réseau routier, **caractérisé en ce que** la portion de trajet (3) est conçue sous la forme d'une image de secteur de route en noir et blanc ou en couleur, les routes pouvant être reconnues par des transitions différentes du gris ou des couleurs dans lesquelles l'image de secteur de route passe de transitions dégradées brutales du gris ou des couleurs en gradients avec effet de flou du gris ou des couleurs et l'image de secteur de route avec effet de flou étant transformée avec une transformation donnée, une deuxième image de secteur de route étant définie dans la deuxième carte à une proximité supposée de la portion de trajet (7) donnée, les transitions dégradées brutales du gris ou des couleurs dans la deuxième image de secteur de route devenant des gradients avec effet de flou du gris ou des couleurs et l'image de secteur de route avec effet de flou étant transformée avec une transformation donnée ; et les coefficients de transformation étant ensuite comparés entre eux afin de déterminer à partir d'une évaluation des coefficients de transformation la position géographique de la portion de trajet (7) donnée dans la deuxième carte.

**2.** Procédé selon la revendication 1, **caractérisé en ce que** lors de l'effet de flou en partant des routes, les valeurs de gris ou de couleur des pixels de l'environnement de la route sont adaptées point par point à la valeur du gris ou de la couleur de la route.

**3.** Procédé selon la revendication 1, **caractérisé en ce que** lors de l'effet de flou en partant des surfaces (10) qui se trouvent entre les routes, les valeurs de gris ou de couleur des pixels de l'environnement de la route sont adaptées point par point à la valeur du gris ou de la couleur de la surface libre.

**4.** Procédé selon la revendication 2 ou 3, **caractérisé en ce que** lors de l'adaptation, l'influence des valeurs de gris ou de couleur diminue avec une fonction d'évanouissement.

**5.** Procédé selon l'une des revendications précédentes, **caractérisé en ce que** les coefficients d'une transformation à l'emplacement précis sont calculés.

**6.** Procédé selon la revendication 5, **caractérisé en ce que** les coefficients d'ondelette d'une transformation d'ondelette sont calculés.

**7.** Procédé selon la revendication 6, **caractérisé en ce que** l'ondelette de Haar est utilisée.

**8.** Procédé selon l'une des revendications précédentes, **caractérisé en ce que** lors de la comparaison des coefficients de transformation, plusieurs comparaisons matricielles sont effectuées lors desquelles une matrice différentielle est à chaque fois calculée et les éléments de matrice dont la valeur absolue est inférieure à une valeur limite prédéfinie sont ensuite comptés.

**9.** Procédé selon l'une des revendications 1 à 7, **caractérisé en ce que** lors de la comparaison des coefficients de transformation, plusieurs comparaisons matricielles sont effectuées lors desquelles une matrice différentielle est à chaque fois calculée et la norme de la matrice différentielle est ensuite formée.

**10.** Procédé selon l'une des revendications précédentes, **caractérisé en ce que** les coefficients de transformation sont calculés sur plusieurs paliers de décomposition.

**11.** Procédé selon la revendication 10, **caractérisé en ce que** la localisation démarre avec un palier de décomposition plus élevé.

**12.** Procédé selon l'une des revendications précédentes, **caractérisé en ce qu'**un décalage, une rotation et/ou une déformation de la portion de trajet donnée peut être déterminé dans la deuxième carte à partir de l'évaluation des coefficients de transformation.

**13.** Système (1, 5) comprenant une mémoire de données (2) pour une carte numérisée d'un réseau routier (9) et une mémoire de données (6) pour une deuxième carte numérisée du réseau routier pour mettre en oeuvre le procédé de localisation d'une portion de trajet (3) donnée de la première carte numérisée du réseau routier dans une deuxième carte numérisée du réseau routier selon l'une des revendications 1 à 12, et le système (1, 5) est configuré pour concevoir une portion de trajet (3) de la carte sous la forme d'une image de secteur de route en noir et blanc ou en couleur, les routes pouvant être reconnues par des valeurs de gris ou de couleur différentiables ; pour faire passer l'image de secteur de route de transitions dégradées brutales du gris ou des couleurs en gradients avec effet de flou du gris ou des couleurs et pour transformer l'image de secteur de route avec effet de flou avec une transformation donnée, pour définir une deuxième image de secteur de route dans la deuxième carte à une proximité supposée de la portion de trajet (7) donnée, pour faire passer les transitions dégradées brutales du gris ou des couleurs dans la deuxième image de secteur de route en des gradients avec effet de flou du gris ou des couleurs et pour transformer l'image de secteur de route avec effet de flou avec une transformation donnée et finalement pour comparer entre eux les coefficients de transformation afin de déterminer à partir d'une évaluation des coefficients de transformation la position géographique de la portion de trajet donnée dans la deuxième carte.

**Fig. 1**

**Fig. 2**

**Fig. 3**

11

12

**Fig. 4a**

13

**Fig. 4b**

14

**Fig. 4c**

15

**Fig. 4d**

16

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1122518 A1

- EP 1225552 B1

**In der Beschreibung aufgeführte Nicht-Patentliteratur**

- Local registration and deformation of a road cartograhic database on a SPOT satellite image. **RELLIER G et al.** PATTERN RECOGNITION. ELSEVIER, Oktober 2002, vol. 35, 2213-2221